(19)

**Europäisches Patentamt**
**European Patent Office**
**Office européen des brevets**

(11) **EP 3 729 662 B1**

(12) **EUROPEAN PATENT SPECIFICATION**

(45) Date of publication and mention
of the grant of the patent:
**24.11.2021 Bulletin 2021/47**

(51) Int Cl.:
**H04B 1/00** *(2006.01)*　　　**H04B 7/08** *(2006.01)*

(21) Application number: **18822350.7**

(86) International application number:
**PCT/EP2018/086018**

(22) Date of filing: **19.12.2018**

(87) International publication number:
**WO 2019/122039 (27.06.2019 Gazette 2019/26)**

(54) **MULTI-ANTENNA RECEIVER AND RECEIVING METHOD**

MEHRFACHANTENNENEMPFÄNGER UND EMPFANGSVERFAHREN

RÉCEPTEUR MULTI-ANTENNES, ET PROCÉDÉ DE RÉCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2017 EP 17209291**

(43) Date of publication of application:
**28.10.2020 Bulletin 2020/44**

(73) Proprietors:
• **Sony Semiconductor Solutions Corporation
Atsugi-shi, Kanagawa 243-0014 (JP)**
• **Sony Europe Limited
Weybridge, Surrey KT13 0XW (GB)**
Designated Contracting States:
**AL**

(72) Inventors:
• **EITEL, Ben
70327 Stuttgart (DE)**
• **FRITZ, Martin
70327 Stuttgart (DE)**
• **WITT, Arthur
70327 Stuttgart (DE)**
• **FISCHER, Robert
70327 Stuttgart (DE)**

(74) Representative: **Witte, Weller & Partner
Patentanwälte mbB
Postfach 10 54 62
70047 Stuttgart (DE)**

(56) References cited:
**US-A- 5 528 581**

• SANDHU S ET AL: "Analog combining of multiple receive antennas with OFDM", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS], IEEE OPERATIONS CENTER, PISCATAWAY, NJ, vol. 5, 11 May 2003 (2003-05-11), pages 3428-3432, XP010643082, DOI: 10.1109/ICC.2003.1204091 ISBN: 978-0-7803-7802-5
• YANG SUN ET AL: "A multiple sub-carrier selection (MSCS) diversity architecture with reduced receiver complexity for wireless OFDM applications", 2004 IEEE 60TH VEHICULAR TECHNOLOGY CONFERENCE. VTC2004-FALL (IEEE CAT. NO.04CH37575) IEEE PISCATAWAY, NJ, USA, IEEE, vol. 1, 26 September 2004 (2004-09-26), pages 439-442, XP010786699, DOI: 10.1109/VETECF.2004.1400041 ISBN: 978-0-7803-8521-4
• ATHANASIOS PAPOULIS: "Generalized sampling expansion", IEEE TRANSACTIONS ON CIRCUITS AND SYSTEMS, IEEE INC. NEW YORK, US, vol. CAS-24, no. 11, 1 November 1977 (1977-11-01), pages 652-654, XP002714386, cited in the application

EP 3 729 662 B1

**Description**

BACKGROUND

FIELD OF THE DISCLOSURE

The present disclosure relates to a multi-antenna receiver and a receiving method.

DESCRIPTION OF RELATED ART

Multi-antenna receivers are widely used, e.g. in broadcasting systems for receiving RF signals transmitted by a broadcasting station. The signal-to-noise ratio (SNR) of known multi-antenna receivers is considered too low.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly or impliedly admitted as prior art against the present disclosure.

US 5,528,551 A discloses that a diversity transmission system the problem arises that almost no improvement can be obtained when the signals to be received show frequency selective fading within the band width of the signal to be transmitted. To solve this problem the signal to be received is separated by filter banks into a number of sub-band signals. Corresponding sub-band signals of different filter banks are combined by the combiners into combined sub-band signals. These combined sub-band signals are combined to a broad band signal by a final combiner.

SANDHU S ET AL, "Analog combining of multiple receive antennas with OFDM", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS], IEEE OPERATIONS CENTER, PISCATAWAY, NJ, (20030511), vol. 5, doi:10.1109/ICC.2003.1204091, ISBN 978-0-7803-7802-5, pages 3428 - 3432 discloses a scheme using scalar weights to combine the receive antennas in the time domain.

SUMMARY

It is an object to provide a multi-antenna receiver and a receiving method providing a higher SNR compared to known multi-antenna receivers and receiving methods without increasing the complexity. It is a further object to provide a corresponding computer program for implementing the receiving method and a non-transitory computer-readable recording medium for implementing the receiving method.

According to an aspect there is provided a multi-antenna receiver comprising

- two or more antennas configured to receive RF signals,
- pre-filter circuitry configured to split, per antenna, the RF signal received by the respective antenna into two or more sub-signals in different signal bands,
- selection circuitry configured to select, per signal band, one or more sub-signals according to a selection criterion and to combine, per signal band, the selected sub-signals to obtain a combined signal per signal band,
- analog-to-digital conversion circuitry configured to convert, per signal band, the combined signals into the digital domain, and
- recombining circuitry configured to recombine the combined signals converted into the digital domain to obtain a reconstructed signal.

According to a further aspect there is provided a receiving method comprising

- obtaining RF signals received by two or more antennas,
- splitting, per antenna, the RF signal received by the respective antenna into two or more sub-signals in different signal bands,
- selecting, per signal band, one or more sub-signals according to a selection criterion,
- combining, per signal band, the selected sub-signals to obtain a combined signal per signal band,
- converting, per signal band, the combined signals into the digital domain, and
- recombining the combined signals converted into the digital domain to obtain a reconstructed signal.

According to still further aspects a computer program comprising program means for causing a computer to carry out the steps of the method disclosed herein, when said computer program is carried out on a computer, as well as a non-transitory computer-readable recording medium that stores therein a computer program product, which, when executed by a processor, causes the method disclosed herein to be performed are provided.

Embodiments are defined in the dependent claims. It shall be understood that the disclosed receiving method, the disclosed computer program and the disclosed computer-readable recording medium have similar and/or identical further embodiments as the claimed receiver and as defined in the dependent claims and/or disclosed herein.

One of the aspects of the disclosure is to provide for an early combination of received RF signals from two or more antennas to achieve a diversity gain while keeping power consumption low and avoiding the need for high-resolution analog-to-digital converters (ADCs) for each antenna branch. Early multi-antenna combining allows for additional diversity gain due to additionally degrees of freedom. By preferably applying an oversampled version of generalized bandpass sampling, the signal of one antenna is split into N sub-sampled branches in the analog domain. The most suitable N branches of all antenna branches are digitized and the herewith obtained digital signals are recombined in the digital domain. The branch-based signal combining can yield significant SNR gains compared to known early antenna combining schemes.

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

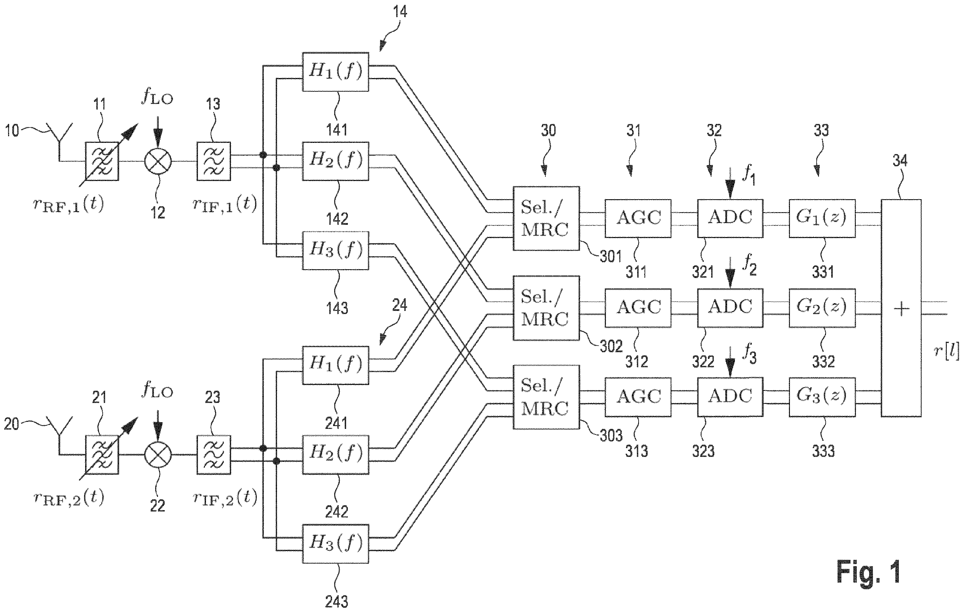

Fig. 1    shows a circuit diagram of an embodiment of a multi-antenna receiver according to the present disclosure.

DETAILED DESCRIPTION OF THE EMBODIMENTS

Referring now to the drawings, wherein like reference numerals designate identical or corresponding parts throughout the several views, Fig. 1 shows a circuit diagram of an embodiment of a multi-antenna receiver 1 according to the present disclosure for receiving broadband signals (RF signals). Such a receiver and a corresponding receiving method are particularly suitable for the use in a frequency-selective mobile channel, as it typically occurs in case of mobile reception due to multi-path propagation. The exemplary embodiment is shown in Fig. 1 for M=2 antennas and K=3 branches (signal bands). It shall be noted that the receiver may use a different number of antennas (in general, at least two antennas) and a different number of branches (in general, at least two branches). Double lines in Fig. 1 indicate that the signal may generally be complex-valued.

The received RF (radio frequency) signals $r_{RF,1}(t)$ and $r_{RF,2}(t)$ at the M antennas 10, 20 may individually be down-converted by a single mixing stage 12, 22, following a low-IF (low intermediate frequency) or zero-IF strategy. Additional components like LNA, tunable selection filters 11, 21 and 13, 23 or similar components are mostly not depicted for brevity. Preferably, this down-conversion and other preprocessing is identical in both antenna paths. It is also possible, to neglect the down-conversion at all (i.e. omit the mixing stages) and use a direct-RF sampling strategy.

Complex baseband (low-IF) signal processing of the down-converted RF signals $r_{IF,1}(t)$ and $r_{IF,2}(t)$ is done by an adapted multi-band sampling system, which may be based on a sampling theory as described e.g. in Athanasios Papoulis. Generalized Sampling Expansion, IEEE Transactions on Circuits and Systems, vol. CAS-24, no. 11, pp. 652-654, Nov. 1977 or John L. Brown (Jr.), Sergio D. Cabrera. Multi-Channel Sampling of Low-Pass Signals, IEEE Transactions on Circuits and Systems, vol. 28, no. 2, pp. 101-106, Feb. 1981. This sampling theory describes a sampling system with K continuous-time pre-filters and K post-filters. Thereby, K is a design parameter which can be chosen (almost) freely.

According to the embodiment of the receiver 1 shown in Fig. 1 pre-filters 14, 24 (e.g. each in form of a filter bank) are provided, wherein each pre-filter, per antenna, comprises three pre-filter units 141, 142, 143 and 241, 242, 243, respectively, each having a transfer function $H_k(f)$ (k=1, 2 or 3). The obtained sub-signals after the pre-filters 14, 24 are thus sampled with 1/K of the Nyquist rate (the minimal possible sampling rate), which sampling with the Nyquist rate avoids aliasing. Each of the down-converted RF signals $r_{IF,1}(t)$ and $r_{IF,2}(t)$ is, per antenna path, thus split into three (in general K, K being an integer of at least 2) sub-signals in different signal bands.

It can now be selected, per signal band (branch), from which of the antennas the signal shall be further processed, i.e. a "signal band selection" (also called "branch selection") can be done. Hence, a selector 30 is provided, e.g. comprising a selection unit 301, 302, 303 per signal band, which selects one or more of the sub-signals in the respective signal band according to a selection criterion and combines, per signal band, the selected sub-signals to obtain a combined signal per signal band. Hence, per branch the best antenna(s) can be selected instead of a global (over the entire band) selection. An appropriate selection criterion is to select the signal with the highest power. Maximum-ratio-combining (MRC) per signal band or other selection criteria can also be used. Generally, selection criteria that may be used are the signal power, the interference power, the signal-to-noise ratio, SNR, the signal-to-interference ratio, the signal-to-interference-plus-noise ratio, SINR, and mathematical derivations thereof such as the average or peak signal power or the inverse of the interference power.

Optionally, automatic gain control (AGC) 31, in particular an AGC unit 311, 312, 313 per signal band, is provided, which can be adjusted to lower the quantization noise in each signal band so that the respective signal has an optimal signal level before it is subject to a following analog-to-digital conversion. This improves the total signal quality (in particular the signal-to-noise ratio) in (e.g. mobile) reception over frequency-selective channels.

Subsequently, an analog-to-digital converter (ADC) 32, in particular an ADC unit 321, 322, 323 per signal band, is provided to convert, per signal band, the combined (and optionally gain controlled) signals into the digital domain.

The digital signals are then filtered by a (time-discrete) post-filter 33, in particular a post-filter unit 331, 332, 333 per signal band, each having a transfer function $G_k(z)$ (k=1, 2, 3). Finally, the filtered signals are recombined by a recombiner 34. The combined signals are thus converted into the digital domain and a reconstructed signal r(I) is finally obtained.

Hence, according to the present disclosure at an early stage and before the (high-resolution) ADC the branches are selected (and, if more than one antenna signal is selected in a signal band, combined). Compared to a single-antenna approach, neither more nor higher-resolution ADCs are required. The number and the requirements on the ADCs are the same as conventional time-interleaved sampling in single-antenna receivers.

The main (low) complexity in the analog domain is caused by the pre-filters 14, 24. Further, with the same amount of ADC units (same sampling/conversion complexity) diversity can be achieved. The constraints on the pre-filters (stipulated by the theory of multi-branch sampling) can be relaxed via some (mild) form of oversampling done by the ADC 32.

The ADC part including pre- and post-processing can generally be implemented in different ways. For instance, the approach described in the above cited papers of Papoulis and Brown may be used. According to this approach an analog signal x(t) is split into K branches by K linear time-invariant (LTI) systems $H_k(f)$, with $1 \leq k \leq K$. These branch signals are sampled with sampling frequency $f_x$ (x=1, 2, 3), which is 1/K of the signal bandwidth or the Nyquist sampling rate. According to Papoulis and Brown, an analog post-filter $G_k(f)$ is used per branch for reconstruction of the analog signal. According to the present disclosure, in contrast, the post-filters 33 are by time-discrete filters in order to use a discrete-time output signal.

In other embodiments a hybrid filter bank ADC approach may be used as e.g. described in Scott R. Velazquez, Truong Q. Nguyen, Steven R. Broadstone, Design of Hybrid Filter Banks for Analog/Digital Conversion, IEEE Transactions on Signal Processing, vol. 46, no. 4, April 1998. Such a hybrid filter bank system for A/D conversion comprises two filter banks for A/D conversion, in particular an analysis filter bank consisting of analog continuous-time or analog discrete-time bandpass filters and a synthesis filter bank realized with time-discrete filter.

In any case, however, according to the present disclosure - different from the known approaches - branch selection (BS) / combining (MRC) is provided to achieve a diversity gain at an early (still analog) stage and, optionally, additional AGCs are provided for improving the SNR and thus the total signal quality.

In an embodiment the following relationship holds for the transfer functions of the pre-filters 14, 24 (also called analysis filters) and the post-filter 33 (synthesis filters):

$$\tilde{G}(f) = T_\mathrm{P} \cdot \tilde{H}^{-1}(f)$$

wherein:

$$\tilde{H}(f) = \begin{bmatrix} H_1(f) & H_2(f) & \cdots & H_K(f) \\ H_1(f + f_\mathrm{P}) & H_2(f + f_\mathrm{P}) & \cdots & H_K(f + f_\mathrm{P}) \\ \vdots & & & \vdots \\ H_1(f + (K-1)f_\mathrm{P}) & H_2(f + (K-1)f_\mathrm{P}) & \cdots & H_K(f + (K-1)f_\mathrm{P}) \end{bmatrix}$$

$$\tilde{G}(f) = \begin{bmatrix} G_1(f) & G_1(f + f_{\mathrm{P}}) & \cdots & G_1(f + (K-1)f_{\mathrm{P}}) \\ G_2(f) & G_2(f + f_{\mathrm{P}}) & \cdots & G_2(f + (K-1)f_{\mathrm{P}}) \\ \vdots & & & \vdots \\ G_K(f) & G_K(f + f_{\mathrm{P}}) & \cdots & G_K(f + (K-1)f_{\mathrm{P}}) \end{bmatrix}$$

with $T_p$ representing the sampling time and $f_p$ representing the sampling frequency of a branch.

The benefit of the proposed receiver architecture is a significant higher SNR compared to conventional antenna-selection receivers for frequency-selective channels, which is achieved by a band-wise separation of the received signal followed by an early selection or combining strategy. Further, the sub-band ADCs within the multi-band sampling scheme sample the sub-band signals by 1/K of the common used Nyquist sampling rate. This is a big advantage for digitization of broadband signals or direct-RF sampling approaches, as the sample rate per implemented ADC is much lower than the necessary Nyquist rate. Further, AGCs may optionally be provided in front of the sub-band ADCs. Due to the frequency-selective channel the signal levels per signal band differ within the multi-band sampling scheme. The AGCs prevent an overdrive of the ADCs in each branch, such that the effect of frequency-selective fading is lowered, e.g., the quantization noise is nearly minimized for each sub band.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being irrplemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

**Claims**

1. A multi-antenna receiver comprising

   - two or more antennas (10, 20) configured to receive RF signals,
   - pre-filter circuitry (14, 24) configured to split, per antenna, the RF signal received by the respective antenna into two or more sub-signals in different signal bands,
   - selection circuitry (30) configured to select, per signal band, one or more sub-signals according to a selection criterion and to combine, per signal band, the selected sub-signals to obtain a combined signal per signal band,
   - analog-to-digital conversion circuitry (32) configured to convert, per signal band, the combined signals into the digital domain, and
   - recombining circuitry (34) configured to recombine the combined signals converted into the digital domain to obtain a reconstructed signal.

2. The multi-antenna receiver as claimed in claim 1,
   wherein the pre-filter circuitry (14, 24) is configured to use the same signal band for splitting the RF signals received by the two or more antennas.

3. The multi-antenna receiver as claimed in claim 1,
wherein the pre-filter circuitry (14, 24) is configured to use, for splitting an RF signal, signal bands having the identical bandwidth.

4. The multi-antenna receiver as claimed in claim 1,
wherein the selection circuitry (30) is configured to apply as selection criterion the signal power, the interference power, the signal-to-noise ratio, SNR, the signal-to-interference ratio, the signal-to-interference-plus-noise ratio, SINR, and mathematical derivations thereof such as the average or peak signal power or the inverse of the interference power.

5. The multi-antenna receiver as claimed in claim 1,
wherein the analog-to-digital conversion circuitry (32) is configured to oversample the combined signals in order to convert them into the digital domain.

6. The multi-antenna receiver as claimed in claim 5,
further comprising post-filter circuitry (33) configured to separately filter, per signal band, the combined signals converted into the digital domain before recombining them.

7. The multi-antenna receiver as claimed in claim 1,
further comprising gain control circuitry (31) configured to control, per signal band, gain of the combined signals before converting them into the digital domain.

8. A receiving method comprising

- obtaining RF signals received by two or more antennas (10, 20),
- splitting, per antenna, the RF signal received by the respective antenna into two or more sub-signals in different signal bands,
- selecting, per signal band, one or more sub-signals according to a selection criterion,
- combining, per signal band, the selected sub-signals to obtain a combined signal per signal band,
- converting, per signal band, the combined signals into the digital domain, and
- recombining the combined signals converted into the digital domain to obtain a reconstructed signal.

9. A computer program comprising program code means for causing the multi-antenna receiver according to claim 1 to perform the method of claim 8.

**Patentansprüche**

1. Mehrfachantennenempfänger, der Folgendes umfasst:

- zwei oder mehr Antennen (10, 20), die konfiguriert sind, HF-Signale zu empfangen,
- eine Vorfilterschaltungsanordnung (14, 24), die konfiguriert ist, pro Antenne das HF-Signal, das durch die jeweilige Antenne empfangen wird, in zwei oder mehr Teilsignale in unterschiedlichen Signalbändern aufzuteilen,
- eine Auswahlschaltungsanordnung (30), die konfiguriert ist, pro Signalband gemäß einem Auswahlkriterium ein oder mehrere Teilsignale auszuwählen und pro Signalband die ausgewählten Teilsignale zu kombinieren, um ein kombiniertes Signal pro Signalband zu erhalten,
- eine Analog/Digital-Umsetzungsschaltungsanordnung (32), die konfiguriert ist, pro Signalband die kombinierten Signale in den digitalen Bereich umzusetzen, und
- eine Rekombinationsschaltungsanordnung (34), die konfiguriert ist, die kombinierten Signale, die in den digitalen Bereich umgesetzt sind, zu rekombinieren, um ein rekonstruiertes Signal zu erhalten.

2. Mehrfachantennenempfänger nach Anspruch 1,
wobei die Vorfilterschaltungsanordnung (14, 24) konfiguriert ist, dasselbe Signalband zum Aufteilen der HF-Signale, die durch die zwei oder mehr Antennen empfangen werden, zu verwenden.

**3.** Mehrfachantennenempfänger nach Anspruch 1,
wobei die Vorfilterschaltungsanordnung (14, 24) konfiguriert ist, zum Aufteilen der HF-Signale Signalbänder zu verwenden, die die gleiche Bandbreite aufweisen.

**4.** Mehrfachantennenempfänger nach Anspruch 1,
wobei die Auswahlschaltungsanordnung (30) konfiguriert ist, als Auswahlkriterium die Signalleistung, die Störleistung, das Signal-Rausch-Verhältnis, SNR, das Signal-Stör-Verhältnis, das Signal-Stör-plus-Rausch-Verhältnis, SINR, und mathematische Ableitungen davon, etwa den Durchschnitt oder die Spitzensignalleistung oder den Kehrwert der Störleistung, zu verwenden.

**5.** Mehrfachantennenempfänger nach Anspruch 1,
wobei die Analog/Digital-Umsetzungsschaltungsanordnung (32) konfiguriert ist, die kombinierten Signale überabzutasten, um sie in den digitalen Bereich umzusetzen.

**6.** Mehrfachantennenempfänger nach Anspruch 5,
der ferner eine Nachfilterschaltungsanordnung (33) umfasst, die konfiguriert ist, pro Signalband die kombinierten Signale, die in den digitalen Bereich umgesetzt sind, getrennt zu filtern, bevor sie rekombiniert werden.

**7.** Mehrfachantennenempfänger nach Anspruch 1,
der ferner eine Verstärkungssteuerschaltungsanordnung (31) umfasst, die konfiguriert ist, pro Signalband die Verstärkung der kombinierten Signale zu steuern, bevor sie in den digitalen Bereich umgesetzt werden.

**8.** Empfangsverfahren, das Folgendes umfasst:

- Erhalten von HF-Signalen, die von zwei oder mehr Antennen (10, 20) empfangen werden,
- Aufteilen des HF-Signals, das von der jeweiligen Antenne empfangen wird, pro Antenne in zwei oder mehr Teilsignale in unterschiedlichen Signalbändern,
- Auswählen eines oder mehrerer Teilsignale pro Signalband gemäß einem Auswahlkriterium,
- Kombinieren der ausgewählten Teilsignale pro Signalband, um ein kombiniertes Signal pro Signalband zu erhalten,
- Umsetzen des kombinierten Signals in den digitalen Bereich pro Signalband und
- Rekombinieren der kombinierten Signale, die in den digitalen Bereich umgesetzt sind, um ein rekonstruiertes Signal zu erhalten.

**9.** Computerprogramm, das Programmcodemittel zum Bewirken des Mehrfachantennenempfängers nach Anspruch 1 umfasst, um das Verfahren nach Anspruch 8 durchzuführen.

## Revendications

**1.** Récepteur multi-antennes comprenant

- deux ou plusieurs antennes (10, 20) configurées pour recevoir des signaux RF,
- des circuits de pré-filtrage (14, 24) configurés pour diviser, par antenne, le signal RF reçu par l'antenne respective en deux ou plusieurs sous-signaux dans des bandes de signal différentes,
- des circuits de sélection (30) configurés pour sélectionner, par bande de signal, un ou plusieurs sous-signaux selon un critère de sélection et combiner, par bande de signal, les sous-signaux sélectionnés pour obtenir un signal combiné par bande de signal,
- des circuits de conversion analogique-numérique (32) configurés pour convertir, par bande de signal, les signaux combinés dans le domaine numérique, et
- des circuits de recombinaison (34) configurés pour recombiner les signaux combinés convertis dans le domaine numérique afin d'obtenir un signal reconstruit.

**2.** Récepteur multi-antennes selon la revendication 1,
dans lequel les circuits de pré-filtrage (14, 24) sont configurés pour utiliser la même bande de signal pour diviser les signaux RF reçus par les deux antennes ou plus.

**3.** Récepteur multi-antennes selon la revendication 1,

dans lequel les circuits de pré-filtrage (14, 24) sont configurés pour utiliser, pour diviser un signal RF, des bandes de signal de même bande passante.

4. Récepteur multi-antennes selon la revendication 1,
dans lequel les circuits de sélection (30) sont configurés pour appliquer comme critère de sélection la puissance de signal, la puissance d'interférence, le rapport signal/bruit, SNR, le rapport signal/interférence, le rapport signal/interférence plus bruit, SINR, et leurs dérivations mathématiques telles que la puissance de signal moyenne ou de crête ou l'inverse de la puissance d'interférence.

5. Récepteur multi-antennes selon la revendication 1,
dans lequel les circuits de conversion analogique-numérique (32) sont configurés pour sur-échantillonner les signaux combinés afin de les convertir dans le domaine numérique.

6. Récepteur multi-antennes selon la revendication 5, comprenant en outre des circuits de post-filtrage (33) configurés pour filtrer séparément, par bande de signal, les signaux combinés convertis dans le domaine numérique avant de les recombiner.

7. Récepteur multi-antennes selon la revendication 1,
comprenant en outre des circuits de commande de gain (31) configurés pour commander, par bande de signal, le gain des signaux combinés avant de les convertir dans le domaine numérique.

8. Procédé de réception comprenant

  - l'obtention de signaux RF reçus par deux antennes ou plus (10, 20),
  - la division, par antenne, du signal RF reçu par l'antenne respective en deux ou plusieurs sous-signaux dans des bandes de signal différentes,
  - la sélection, par bande de signal, d'un ou plusieurs sous-signaux selon un critère de sélection,
  - la combinaison, par bande de signal, des sous-signaux sélectionnés pour obtenir un signal combiné par bande de signal,
  - la conversion, par bande de signal, des signaux combinés dans le domaine numérique, et
  - la recombinaison des signaux combinés convertis en le domaine numérique pour obtenir un signal reconstruit.

9. Programme d'ordinateur comprenant un code de programme permettant au récepteur multi-antennes selon la revendication 1 de réaliser le procédé selon la revendication 8.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5528551 A

### Non-patent literature cited in the description

- Analog combining of multiple receive antennas with OFDM. **SANDHU S et al.** NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS. IEEE OPERATIONS CENTER, vol. 5, 3428-3432
- Athanasios Papoulis. Generalized Sampling Expansion. *IEEE Transactions on Circuits and Systems,* November 1977, vol. CAS-24 (11), 652-654

- **JOHN L. BROWN (JR. ; SERGIO D. CABRERA.** Multi-Channel Sampling of Low-Pass Signals. *IEEE Transactions on Circuits and Systems,* February 1981, vol. 28 (2), 101-106
- **SCOTT R. VELAZQUEZ ; TRUONG Q. NGUYEN ; STEVEN R. BROADSTONE.** Design of Hybrid Filter Banks for Analog/Digital Conversion. *IEEE Transactions on Signal Processing,* April 1998, vol. 46 (4